# FASCICULE DE BREVET EUROPEEN

(11) **EP 1 445 729 B1**
(45) Date de publication et mention de la délivrance du brevet: **30.11.2005**
(21) Numéro de dépôt: 04100419.3
(22) Date de dépôt: 05.02.2004
(51) Int. Cl.: G06K 13/08, G06K 7/00

(54) **Agencement pour le blocage d'un support de données dans un dispositif d'échange de données**
Anordnung für das Blockieren eines Datenträgers in einer Datenaustauschvorrichtung
Arrangement for blocking a data support in a data exchange device

(30) Priorité: 06.02.2003 FR 0301571
(43) Date de publication de la demande: 11.08.2004
(73) Titulaire: VALEO SECURITE HABITACLE, 94042 Créteil (FR)
(72) Inventeur: Calor, Hervé, 58320 Pougues Les Eaux (FR); Canard, Louis, 58000 Nevers (FR)
(74) Mandataire: Rosolen-Delarue, Katell

(56) Documents cités:
- EP-A- 1 162 701
- DE-A- 19 955 300
- FR-A- 2 779 563
- FR-A- 2 786 297

## Description

La présente invention concerne un agencement pour l'échange de données entre un support de données rigide, ou semi-rigide, et un dispositif d'échange de données, notamment de lecture de données contenues dans le support.

L'invention concerne plus particulièrement un tel agencement pour l'échange de données entre un support de données rigide, ou semi-rigide, et un dispositif d'échange de données, notamment de lecture de données contenues dans le support, du type comportant un boîtier dans lequel le support en forme générale de carte est introduit longitudinalement, manuellement d'arrière en avant, dans un logement du boîtier dans lequel il occupe une position active déterminée, et du type dans lequel le dispositif comporte un organe de blocage qui est monté mobile par rapport au boîtier entre une position de blocage dans laquelle il retient longitudinalement le support de données en position active dans le boîtier, et une position escamotée permettant l'extraction du support de données hors du boîtier, et un organe de commande de l'organe de blocage avec lequel coopère le bord transversal avant du support de données.

On connaît de nombreux exemples de tels agencements destinés à équiper un véhicule automobile et dans lesquels le support de données, qui est par exemple en forme de carte ou de badge plan et globalement rectangulaire, porte des données d'identification de l'utilisateur du véhicule qui l'autorisent lorsqu'il introduit son badge dans le dispositif de lecture, à utiliser le véhicule en lui permettant notamment de procéder au démarrage du moteur du véhicule.

Pour ce faire, le support de données comporte par exemple un circuit intégré, ou puce, qui est relié à des moyens de lecture du dispositif par des contacts électriques et/ou par une antenne d'échange de données.

Ainsi, lors de l'introduction du badge ou de la carte dans le dispositif, celle-ci est introduite manuellement dans un logement du boîtier dans lequel le support de données occupe une position active déterminée, et le dispositif qui reçoit la carte ou le badge comporte des moyens pour retenir longitudinalement ce support de données en position active dans le boîtier de manière que l'échange de données soit assuré dans de bonnes conditions.

Selon la conception la plus répandue, ces moyens de retenue sont constitués par des simples freins, c'est-à-dire qu'il s'agit de pattes déformables élastiquement qui coopèrent par friction avec des bords latéraux et/ou avec les grandes faces de la carte.

Une telle conception des moyens de retenue du support de données dans le dispositif de lecture n'est pas entièrement satisfaisante dans le cas d'une application à un véhicule automobile dans lequel le dispositif est soumis, lors du roulage, à de nombreuses vibrations qui provoquent progressivement l'éjection du support de données, ou tout au moins son déplacement par rapport à sa position active dite de lecture.

De plus, dans le cas d'une application à un véhicule automobile, il est nécessaire de pouvoir non seulement retenir le support de données en position active, mais aussi le verrouiller en le bloquant dans cette position, en réponse à un ordre de commande de verrouillage, de manière à éviter que dans certaines configurations d'utilisation du véhicule, le conducteur ou un passager puisse extraire inopinément le support de données du dispositif de lecture.

Afin d'améliorer le confort d'utilisation d'un tel agencement, il a déjà été proposé de prévoir des moyens d'assistance à l'introduction et/ou à l'extraction du support de données dans le dispositif.

A cet effet, il a déjà été proposé que le dispositif comporte un tiroir motorisé dans lequel la carte est mise en place manuellement et qui est ensuite commandée électriquement en déplacement entre sa position de repos dans laquelle on introduit la carte et une position active de lecture dans laquelle le tiroir amène la carte en regard de moyens de lecture.

Une telle conception est complexe et lourde et peu adaptée à son intégration dans le cadre d'une application à un véhicule automobile.

En vue de prévoir des moyens d'assistance à l'éjection, il a aussi été proposé de nombreuses applications dans lesquelles l'utilisateur, lors de l'introduction, agit à l'encontre d'un ressort de rappel qui accumule de l'énergie, la carte étant bloquée en position active par des moyens commandés de retenue, le ressort préalablement bandé restituant l'énergie en vue d'assister l'extraction de la carte, cette assistance pouvant aboutir jusqu'à une éjection complète hors du logement du boîtier.

Selon une autre conception connue du document FR-A-2.779.563, le support de données comporte une fenêtre, et le boîtier comporte un levier de blocage du support qui est monté pivotant, autour d'un axe transversal, entre une position stable de blocage vers laquelle le levier de blocage est rappelé élastiquement et dans laquelle un doigt de blocage formé à l'extrémité libre d'un bras du levier de blocage s'étend verticalement à l'intérieur de la fenêtre, et une position stable escamotée vers laquelle le levier est rappelé élastiquement et dans laquelle le doigt de blocage est situé hors de la fenêtre pour permettre l'extraction du support de données hors du boîtier.

Dans cette conception, le levier de blocage est rappelé élastiquement, vers ses deux positions stables de blocage et escamotée, par un ressort bistable. Le document DE-A-19 955 300 représente la base pour le préambule de la revendication 1.

La présente invention vise à augmenter la fiabilité de fonctionnement durant toute la durée de vie d'un véhicule et cela quelque soit le nombre d'introduction et d'extraction du support de données.

A cet effet, l'invention propose un agencement du type décrit précédemment, caractérisé en ce que l'organe de blocage est sollicité élastiquement en permanence vers la position de blocage et en ce que l'organe de commande est monté mobile,
- d'une part en translation longitudinale par rapport au boîtier entre une position arrière de repos et une position extrême avant de commande du blocage, et
- d'autre part, par rapport à l'organe de blocage avec lequel il coopère de manière à provoquer le blocage automatique du support de données lorsque l'organe de commande atteint sa position extrême avant.

Avantageusement, la fiabilité d'un agencement selon l'invention est améliorée par l'utilisation d'organe élastique tel que des ressorts à boudin de compression ou de traction, tout en réduisant le coût de production.

Grâce à l'invention, le support de données n'est pas exposé à des frottements susceptibles d'en détériorer l'aspect extérieur, puisque le blocage du support de données n'intervient qu'en fin de course, c'est-à-dire lorsque l'organe de commande se trouve en position extrême avant.

Selon d'autres caractéristiques de l'agencement selon l'invention :
- l'organe de commande comporte un profil de came et l'organe de blocage comporte un doigt de commande formant suiveur de came qui coopère avec le profil de came avec lequel il est maintenu en contact par un organe de rappel élastique ;
- l'organe de rappel élastique sollicite élastiquement l'organe de blocage vers sa position de blocage ;
- le profil de came comporte une portion globalement rectiligne d'orientation longitudinale qui se prolonge à l'arrière par une encoche dans laquelle est reçu le doigt de commande lorsque l'organe de commande est en position extrême avant et l'organe de blocage en position de blocage ;
- l'encoche comporte un flanc avant formant rampe avec lequel coopère le doigt de commande lors de l'extraction du support de données hors du boîtier ;
- l'organe de blocage consiste en un coulisseau monté mobile transversalement et dans plan horizontal globalement parallèle au support de données ;
- l'organe de blocage comporte un doigt de blocage qui, en position de blocage, coopère avec un cran complémentaire du support de données ;
- le cran est réalisé dans au moins un des bords longitudinaux du support de données, et en ce que le cran est ouvert transversalement ;
- l'escamotage de l'organe de blocage à l'encontre des moyens qui le sollicite élastiquement vers sa position de blocage, est provoqué lors de l'extraction du support de données par la coopération d'un bord transversal avant du cran latéral du support de données avec un profil de came arrière complémentaire du doigt de blocage formant rampe ;
- en position arrière de repos, l'organe de commande obture une fenêtre d'introduction du support de données dans le logement ;
- il comporte un organe élastique qui est interposé entre l'organe de commande et le boîtier et en ce que le déplacement de l'organe de commande de sa position arrière de repos vers sa position extrême avant s'effectue à l'encontre de cet organe élastique de manière à constituer un organe d'éjection automatique du support de données ;
- il comporte des moyens de butée qui déterminent la position arrière de repos de l'organe de commande ;
- le boîtier comporte un électroaimant de verrouillage de l'organe de blocage dans sa position de blocage du support de données, dont le noyau mobile constitue un doigt de verrouillage qui peut être commandé en saillie à l'extérieur du boîtier de l'électroaimant pour s'étendre en regard d'une partie l'organe de blocage afin d'empêcher ce dernier de se déplacer vers sa position escamotée ;
- en position active, au moins une partie arrière du support de données fait saillie hors du boîtier de manière à constituer une partie de préhension permettant de l'extraire hors du boîtier ;
- il équipe un véhicule automobile dont les fonctions d'antivol sont partiellement ou totalement assurées par traitement de données dont certaines, contenues dans le support de données, sont représentatives d'un utilisateur autorisé, ou d'un groupe d'utilisateurs autorisés, du véhicule.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective de dessous qui illustre les principaux composants d'un agencement conforme aux enseignements de l'invention et sur laquelle le support de données est illustré hors du boîtier du dispositif d'échange de données ;
- la figure 2 est une vue éclatée en perspective de trois-quart avant et de dessus d'un boîtier du dispositif d'échange de données selon la figure 1 sur laquelle l'organe de commande et l'organe de blocage sont en position arrière de repos et en position escamotée, c'est-à-dire leurs positions respectives avant que le bord transversal avant du support de données n'accoste l'organe de commande lors de son introduction dans le logement du boîtier;
- la figure 3 est une vue de dessus d'un agencement similaire à celui des figures 1 et 2 qui illustre le support de données partiellement introduit dans le logement et l'organe de commande dans une position intermédiaire entre sa position arrière de repos et sa position extrême avant ;
- la figure 4 est une vue similaire à celle de la figure 3 qui illustre l'organe de blocage en position de blocage du support de données dans sa position active de lecture ; et
- la figure 5 est une vue similaire à la figure 4 qui illustre le verrouillage de l'organe de blocage dans sa position de blocage.

Dans la description qui va suivre, les termes "longitudinal", "transversal", "avant", "arrière", "supérieur", "inférieur", etc. sont utilisés en référence aux figures pour faciliter la compréhension de la description et des revendications et ceci à titre non limitatif.

L'agencement 10 conforme aux enseignements de l'invention illustrés sur les figures est constitué pour l'essentiel par un support de données ou badge 12 et un dispositif 14 d'échange de données contenues dans ce support 12.

Le badge 12 est ici un élément rigide de forme générale parallélépipédique, plus spécifiquement plane symétrique rectangulaire et d'épaisseur réduite de conception.

Le badge 12 comporte une face supérieure 16 et une face inférieure 18 qui s'étendent horizontalement et que délimitent d'une part, dans la direction longitudinale, deux bords latéraux respectivement supérieur 20 et inférieur 22 et, d'autre part, un bord transversal avant 24 et un bord transversal arrière 26.

Le badge 12 comporte, à sa partie avant et au voisinage de son bord transversal avant 24, un cran 28 de blocage ici de manière symétrique dans chacun de ses bords latéraux 20, 22.

Le cran 28 est ouvert transversalement et présente en section selon un plan horizontal un profil en tronc de V qui est ainsi délimitée par un bord transversal arrière 30 et un bord transversal avant 32.

Le cran 28 est un cran de blocage au sens de l'invention, c'est-à-dire qu'il est destiné à recevoir un organe de blocage porté par le boîtier qui est susceptible d'y être reçu lorsque le badge occupe une position longitudinale déterminée par rapport au boîtier.

La partie arrière du badge 12 au voisinage de son bord transversal arrière 26 constitue une partie de préhension 34 permettant de le manipuler et notamment de le déplacer longitudinalement parallèlement à son plan général horizontal.

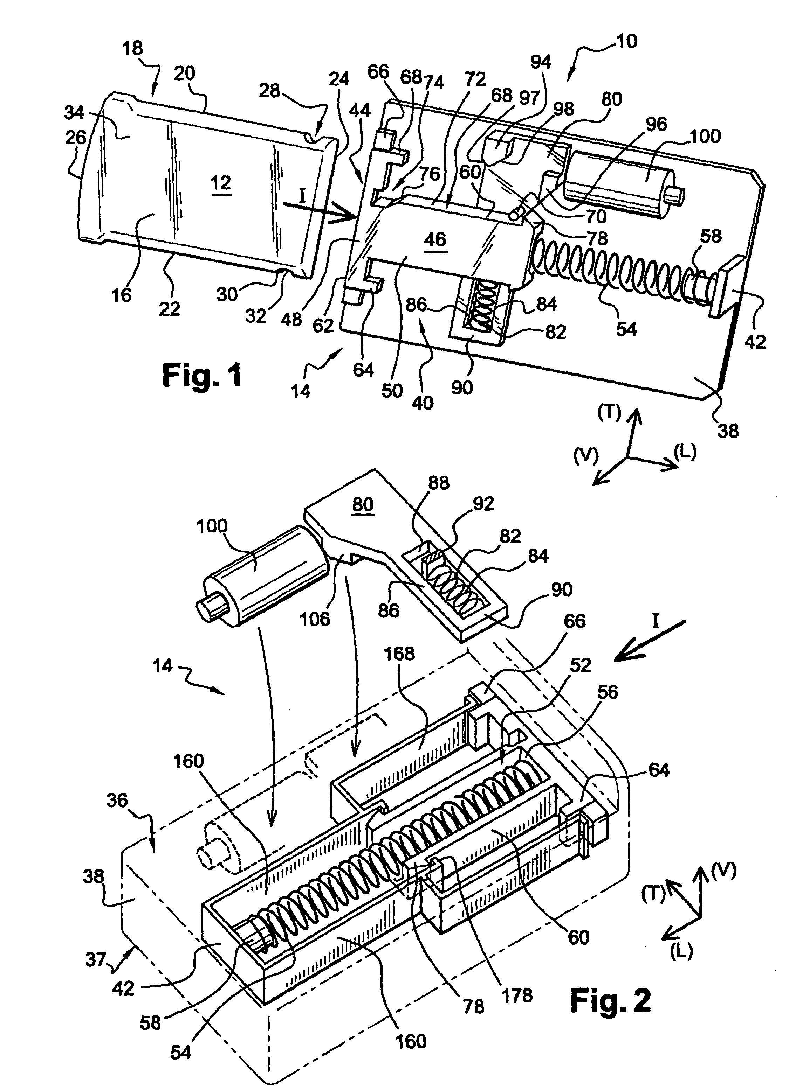

Le badge 12 est un support de données qui est susceptible d'être introduit longitudinalement, c'est-à-dire comme visible sur la figure 1 selon la direction (1) parallèle au plan général de ses faces supérieures 16 et inférieure 18, dans un dispositif 14 d'échange de données qui va maintenant être décrit en détail en référence aux figures 1 et 2 notamment.

Le dispositif 14 d'échange de données, c'est-à-dire de lecture et/ou d'écriture de données contenues dans le badge 12, est ici du type comportant un boîtier 36.

Le boîtier 36 comporte un corps extérieur (non représenté) de forme globalement parallélépipédique qui entoure au moins une platine centrale 38 qui s'étend dans un plan horizontal, telle que représentée à la figure 2.

La platine centrale 38 est une plaque ajourée portant les différents composants du dispositif 14. La platine centrale 38 comporte une face inférieure 36 et une face de dessous 37 sur lesquelles sont montés de part et d'autre les composants du dispositif 14.

Ainsi, les appuis et les moyens de guidage, notamment des organes élastiques ou des composants qui sont montés mobiles par rapport au boîtier 36, sont avantageusement réalisés venus de matière de la pièce centrale 38 par moulage en matière plastique.

Le boîtier 36 comporte un logement 40 de forme générale parallélépipédique rectangle en forme de fente horizontale qui est fermée à son extrémité avant par un fond 42 et dont l'extrémité arrière est ouverte en une fenêtre 44 pour permettre l'introduction longitudinale d'arrière en avant du badge 12 selon la direction (I) et son extraction en sens inverse.

Le dispositif 14 comporte un organe de commande 46 qui est monté mobile longitudinalement par rapport à la platine 38, entre une position extrême arrière de repos illustrée aux figures 1 et 2, et une position extrême avant de commande du blocage.

L'organe de commande 46 présente en section selon un plan horizontal un profil en T et il est constitué d'une barre arrière 48 s'étendant globalement transversalement et d'un corps avant 50 s'étendant globalement longitudinalement vers l'avant.

La barre arrière 48 de l'organe de commande 46 est en section transversale en forme de profilé en U définissant une rainure 52 dans laquelle est logé et reçu le tronçon arrière d'un ressort à boudin de compression 54 qui s'étend longitudinalement.

Le ressort 54 est monté comprimé dans le boîtier en appui par son extrémité arrière contre la face avant 56 de la barre arrière 48 et par son extrémité avant sur un élément, tel que le fond 42, solidaire du boîtier 36.

De préférence, le fond 42 comporte un plot de centrage 58 qui fait saillie de manière à pénétrer à l'intérieur des spires d'extrémité avant de l'organe élastique 54.

De plus, la rainure 52 est délimitée transversalement par des parois latérales 60 s'étendant longitudinalement et qui constituent des moyens de guidage notamment du tronçon arrière de l'organe élastique 54.

La barre transversale arrière 48 de l'organe de commande 46 comporte une face arrière verticale 62, dite face d'accostage, et à chacune de ses extrémités transversales un bord latéral 64 qui s'étend à partir de la face 62 longitudinalement vers l'avant.

En position arrière de repos, l'organe de commande 46 obture la fenêtre 44 d'introduction du badge 12 dans le logement 40, la face arrière 62 étant globalement affleurante au plan vertical de la fenêtre 44.

La fenêtre d'introduction 44 comporte transversalement des glissières 66 de guidage des bords longitudinaux 20, 22 du badge 12 lors de son introduction.

Lors de la course de l'organe de commande 46 entre sa position arrière de repos et sa position extrême avant, les bords latéraux 64 coopèrent, par leurs faces extérieures 68, avec des rails de guidage 168 situés en vis-à-vis et qui sont ici solidaires de la platine centrale 38 du boîtier 36.

De manière analogue, les parois latérales 60 du corps avant 50 coopèrent avec des rails de guidage 160 situés en vis-à-vis et solidaires de la platine centrale 38.

L'organe de commande 46 est ainsi guidé en coulissement longitudinal par son corps avant 50 et par sa barre arrière 48.

L'organe de commande 46 comporte ici dans la face latérale extérieure de sa paroi latérale droite 60 , un profil de came 68 avec lequel coopère un doigt de commande 70 formant suiveur de came, qui est maintenu en contact avec le profil de came par un organe de rappel élastique et qui appartient à l'organe de blocage.

Le profil de came 68 comporte une portion avant globalement rectiligne 72 d'orientation longitudinale qui se prolonge à l'arrière par une encoche 74 dans laquelle est reçu le doigt de commande 70, lorsque l'organe de commande est en position extrême avant.

L'encoche 74 comporte un flanc avant incliné 76 formant rampe avec lequel coopère le doigt de commande 70 lorsque l'organe de commande 46 est déplacé de sa position extrême avant vers sa position arrière de repos.

L'encoche comporte aussi un fond 77 qui est décalé transversalement vers l'intérieur par rapport au plan de la portion avant 72 de manière à permettre au doigt de commende d'y pénétrer entièrement.

Selon une variante non représentée, le profil de came de l'organe de commande 46 comporte en outre une encoche destinée à recevoir le doigt de commande 70 en position de repos, ce qui permet d'améliorer l'étanchéité, en particulier à la poussière du dispositif 14.

Le corps avant 50 de l'organe de commande 46 comporte à l'extrémité avant de chacune des parois latérales 60, des ergots de butée 78 qui coopèrent avec un épaulement 178 que porte la platine centrale 38 dans la zone de raccordement du rail de guidage arrière 168 et du rail de guidage avant 160.

La position extrême arrière de repos de l'organe de commande 46, vers laquelle il est rappelé élastiquement par le ressort 54, est ainsi définie par la venue en butée des ergots 78 contre l'épaulement 178.

Les ergots de butée 78 présentent une élasticité selon la direction transversale de manière à permettre un montage initial irréversible de l'organe de commande 46. Les ergots élastiques 78 coopèrent ainsi avec les rails de guidage 160 pour assurer le guidage avant de l'organe de commande.

En variante, le profil de came 68 est délimité longitudinalement vers l'avant par une butée rigide réalisée venue de matière avec le corps avant 50 de l'organe de commande 46, contre une face arrière de laquelle le doigt de commande 70 vient en appui pour déterminer l'organe de commande 70 (position arrière de repos).

Le doigt de commande 70 est solidaire d'un organe de blocage 80 qui est monté mobile par rapport au boîtier 36 entre une position de blocage dans laquelle il retient longitudinalement le badge 12 en position active dans le boîtier 36 et une position escamotée permettant l'extraction du badge 12 hors du boîtier 36.

L'organe de blocage 80 consiste ici en un coulisseau horizontal monté mobile transversalement par rapport au boîtier 36 et qui s'étend donc globalement perpendiculairement au corps avant 50.

L'organe de blocage 80 s'étend dans un plan horizontal globalement parallèle à celui du badge 12 en position active.

Le coulisseau 80 est sollicité élastiquement en permanence vers la position de blocage par un ressort à boudin 82 de compression. Le ressort 82 qui sollicite le coulisseau 80 constitue ici l'organe de rappel élastique maintenant le doigt de commande 70 en contact permanent avec le profil de came 68 de l'organe de commande 46.

Le coulisseau est un élément globalement en forme de plaque horizontale rectangulaire.

La partie gauche du coulisseau 80 comporte une fenêtre 84 que délimitent longitudinalement deux bords transversaux 86 et transversalement un bord longitudinal droit 88 et un bord longitudinal gauche 90.

Le ressort 82 est logé dans la fenêtre 84 du coulisseau 80 sur le bord longitudinal inférieur 90 duquel l'extrémité droite de l'organe élastique 82 prend appui.

L'extrémité gauche de l'organe élastique 82 prend appui sur une patte d'appui 92 qui est solidaire du boîtier 36, plus précisément qui s'étend ici verticalement depuis la face de dessus 36 de la platine centrale 38.

La patte d'appui 92 s'étend ainsi à travers la fenêtre 84 et coopère avantageusement avec les bords transversaux 86 de manière à constituer des moyens de guidage du coulisseau 80 selon la direction transversale.

Le coulisseau 80 porte, dans sa partie médiane, le doigt de commande 70 qui s'étend verticalement à travers la platine centrale 38 pour coopérer avec le profil de came 68.

Le coulisseau 80 porte au voisinage de sa partie extrême droite, à l'arrière un doigt 94 de blocage du badge et, à l'avant, un pion 96 de verrouillage du coulisseau de sa position de blocage.

L'extrémité transversale intérieure du doigt de blocage 94 présente, en section selon un plan horizontal, un profil en tronc de V complémentaire de celui des crans latéraux 28 du badge.

Le profil en tronc du doigt de blocage 94 guide celui-ci lorsqu'il pénètre dans le cran 28.

Le doigt de blocage 94 est ainsi délimité vers l'arrière par un bord incliné 97 et vers l'avant par un profil de came arrière 98 formant rampe.

L'agencement 10 comporte enfin des moyens de verrouillage du coulisseau 80 en position de blocage, qui sont montés sur la platine centrale 38 en regard de la partie droite du coulisseau 80.

Les moyens de verrouillage sont ici réalisés sous la forme d'un électro-aimant 100 dont le noyau mobile (non représenté) est susceptible de commander une tige ou doigt de verrouillage 102 qui est normalement partiellement escamoté à l'intérieur du corps de l'électro-aimant 100 et qui, en position de verrouillage du coulisseau 80, fait saillie longitudinalement vers l'arrière pour s'étendre en regard d'une face verticale longitudinale 104 du pion de verrouillage 96 pour empêcher tout déplacement transversal du coulisseau 80 vers sa position escamotée.

Le pion de verrouillage 96 comporte une face verticale transversale avant 106 qui, en position escamotée du coulisseau 80, est en vis-à-vis de l'extrémité arrière du doigt de verrouillage 102, interdisant ainsi tout déplacement de ce dernier vers l'arrière et par conséquent toute tentative de verrouillage du coulisseau 80 en position escamotée.

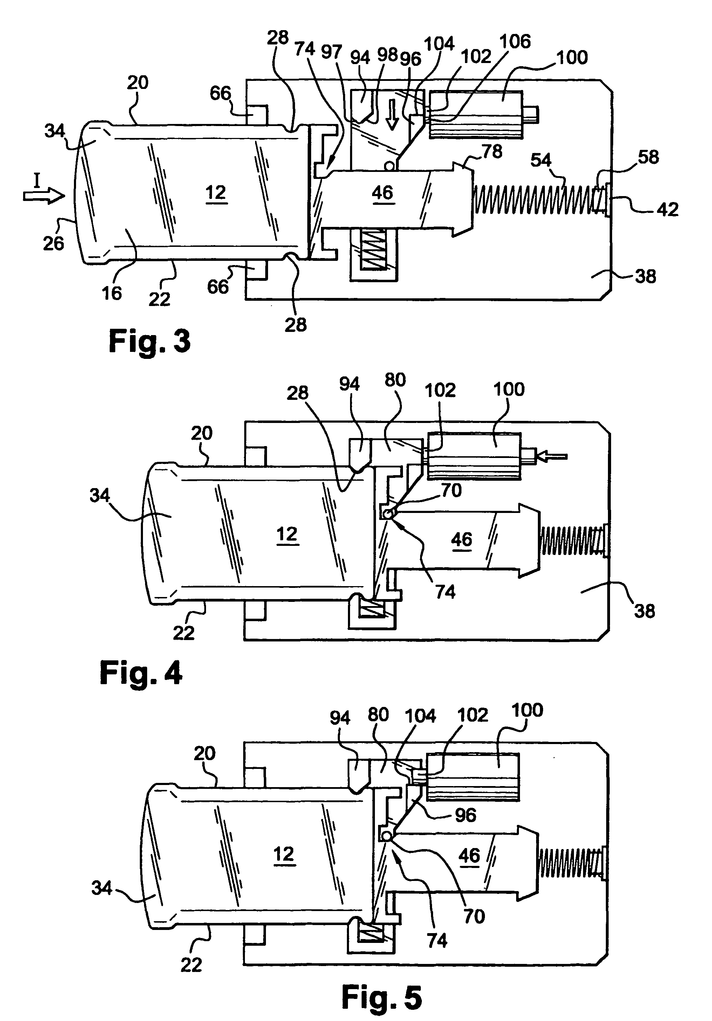

On décrira maintenant le fonctionnement de l'agencement selon l'invention en référence aux figures 3 à 5.

Lorsqu'il n'y a pas de badge 12 dans le boîtier 36 du dispositif 14, l'organe de commande 46, sous l'action du ressort 54, est dans sa position extrême arrière de repos illustrée aux figures 1 et 2, déterminée par les moyens de butée 78.

Dans cette position, la barre arrière 48 de l'organe de commande 46 constitue un "volet" qui obture la fenêtre 44.

L'organe de blocage ou coulisseau 80 est dans position escamotée, comme visible sur la figure 1, dans laquelle le doigt de commande 70 formant suiveur de came coopère avec la portion rectiligne 72 du profil de came 68 contre lequel il est maintenu en appui par le ressort élastique 82.

Avantageusement, le ressort 82 sollicite élastiquement le coulisseau 80 vers sa position de blocage.

L'introduction du badge 12 dans le boîtier 36 se fait manuellement selon un mouvement longitudinal d'arrière en avant de manière que le bord transversal avant 24 du badge 12 vienne accoster la face arrière 56 de l'organe de commande 46.

Comme visible à la figure 3, sous l'action de l'effort qu'exerce l'utilisateur pour introduire le badge 12 dans le logement 40, l'organe de commande 46 quitte sa position arrière de repos et se déplace vers sa position extrême avant à l'encontre du ressort 54.

Lorsque, sous l'action de l'introduction du badge 12, l'organe de commande 46 se déplace vers sa position extrême avant, le doigt de commande 70 formant suiveur de came de déplace de manière analogue vers l'arrière de long de la portion rectiligne 72 du profil de came 68.

Lors de cette phase de déplacement de l'organe de commande 46, le coulisseau 80 reste ainsi dans sa position initiale, c'est-à-dire en position escamotée et le doigt de verrouillage 94 ne vient jamais au contact ni de la face latérale extérieure 68, ni avec les bords longitudinaux 20, 22 du badge 12, évitant ainsi tout frottement et donc toute usure ou trace qui pourraient en résulter.

L'introduction du badge 12 se poursuit et le doigt de commande 70 vient alors pénétrer dans l'encoche 74, ce qui entraîne simultanément un déplacement du coulisseau 80 de la position escamotée à sa position de blocage, comme visible sur la figure 4.

Ce déplacement du coulisseau 80 est automatique dès que le doigt 70 pénètre dans l'encoche 74, puisque le coulisseau 80 est sollicité vers sa position de blocage par le ressort de rappel 82.

En position de blocage, le doigt de blocage 94 pénètre dans le cran latéral 28 du badge 12 dont la position longitudinale est en coïncidence avec celle du doigt 94, le badge 12 étant alors bloqué longitudinalement dans le logement 40, dans sa position active.

En position active, la partie arrière de préhension 34 du badge 12 est en saillie hors du logement 40 et du boîtier 36.

La position extrême avant de l'organe de commande 46 est alors détectée par exemple par un capteur de position, non représenté, qui commande, comme visible sur la figure 5, le verrouillage du coulisseau 80 par le doigt de verrouillage 102.

Lorsque le dispositif 14 est utilisé, il est dès lors impossible d'extraire longitudinalement le badge 12 hors du boîtier 36 tant que le coulisseau est verrouillé par le doigt de verrouillage 102.

Ainsi qu'on l'aura compris, l'organe de commande 46 et le coulisseau 80 fonctionne de manière analogue à un système constitué par une gâchette et une détente.

Lorsque la fin d'utilisation qui peut être définie par différentes conditions, comme le fait que le moteur ne soit pas en fonctionnement, le doigt de verrouillage 102 est commandé et déplacé vers l'avant de manière à revenir à sa position initiale illustrée aux figures 3 et 4.

Il est dès lors possible de procéder à l'extraction du badge 12 hors du boîtier 36 en exerçant sur la partie de préhension 34 un effort de sens opposé, c'est-à-dire longitudinalement d'avant en arrière.

Au cours du mouvement d'extraction, le flanc avant 76 de l'encoche 74 forme une rampe avec lequel coopère le doigt de commande 70 de manière à faciliter par coopération de forme l'extraction du badge 12.

De plus, l'escamotage du coulisseau 80 qui s'effectue à l'encontre du ressort 82 qui le sollicite élastiquement vers sa position de blocage, est provoqué par la coopération du bord transversal avant 32 du cran latéral 28 du badge 12 avec un profil de came arrière 98 complémentaire du doigt de blocage 94 formant rampe.

Avantageusement, l'extraction est assistée par l'organe de commande 46 et le ressort 54 qui constitue un organe d'éjection automatique du badge 12.

A titre de variante non représentée, il est possible de verrouiller directement le badge en position active par un électroaimant dont le doigt de verrouillage pénètre dans le cran 28 de gauche.

L'invention présent en outre l'avantage que le compartiment recevant le badge 12 peut être fermé de façon étanche contre la poussière et des projections intempestives de liquide.

L'invention trouve notamment à s'appliquer à bord d'un véhicule automobile dont les fonctions d'antivol sont partiellement ou totalement assurées par traitement de données dont certaines, contenues dans le support ou badge 12, sont représentatives d'un utilisateur autorisé, ou d'un groupe d'utilisateurs autorisés, du véhicule.

Le traitement des données vise notamment à comparer les données contenues dans le badge 12 avec des données mémorisées à bord du véhicule en vue de permettre l'utilisation autorisée du véhicule, le ou les circuits de traitement assurant la commande totale ou partielle de moyens formant antivol, qu'il s'agisse d'un antivol classique, c'est-à-dire agissant sur la colonne de direction du véhicule, et/ou de moyens empêchant le démarrage du moteur du véhicule et/ou interrompant le fonctionnement du moteur.

De préférence, le traitement des données s'effectue pendant la course d'introduction du badge dans le logement du boîtier avant que l'organe de commande n'atteigne sa position extrême avant.

## Revendications

1. Agencement (10) pour l'échange de données entre un support de données rigide (12), ou semi-rigide, et un dispositif (14) d'échange de données, notamment de lecture de données contenues dans le support, du type comportant un boîtier (36) dans lequel le support (12) en forme générale parallélépipédique est introduit longitudinalement, manuellement d'arrière en avant, dans un logement (40) du boîtier (36) dans lequel il occupe une position active déterminée, et du type dans lequel le dispositif (14) comporte un organe de blocage (80) qui est monté mobile par rapport au boîtier (36) entre une position de blocage dans laquelle il retient longitudinalement le support de données (12) en position active dans le boîtier (36), et une position escamotée permettant l'extraction du support de données (12) hors du boîtier (36), et un organe de commande (46) de l'organe de blocage (80) avec lequel est destiné à coopérer le bord transversal avant (24) du support de données (12),
**caractérisé en ce que** l'organe de blocage (80) est sollicité élastiquement (82) en permanence vers la position de blocage et **en ce que** l'organe de commande (46) est monté mobile,
- d'une part en translation longitudinale par rapport au boîtier (36) entre une position arrière de repos et une position extrême avant de commande du blocage (80), et
- d'autre part, par rapport à l'organe de blocage (80) avec lequel il coopère de manière à provoquer le blocage automatique du support de données (12) lorsque l'organe de commande (46) atteint sa position extrême avant.

2. Agencement selon la revendication 1, **caractérisé en ce que** l'organe de commande (46) comporte un profil de came (68) et l'organe de blocage (80) comporte un doigt de commande (70) formant suiveur de came qui coopère avec le profil de came (68) avec lequel il est maintenu en contact par un organe de rappel élastique (82).

3. Agencement selon la revendication 2, **caractérisé en ce que** l'organe de rappel élastique (82) sollicite élastiquement l'organe de blocage (80) vers sa position de blocage.

4. Agencement selon la revendication 3, **caractérisé en ce que** le profil de came (68) comporte une portion (72) globalement rectiligne d'orientation longitudinale qui se prolonge à l'arrière par une encoche (74) dans laquelle est reçu le doigt de commande (70) lorsque l'organe de commande (46) est en position extrême avant et l'organe de blocage (80) en position de blocage.

5. Agencement selon la revendication 4, **caractérisé en ce que** l'encoche (74) comporte un flanc avant (76) formant rampe avec lequel coopère le doigt de commande (70) lors de l'extraction du support de données (12) hors du boîtier (36).

6. Agencement selon l'une quelconque des revendications précédentes, **caractérisé en ce que** l'organe de blocage (80) consiste en un coulisseau monté mobile transversalement et dans plan horizontal globalement parallèle au support de données (12).

7. Agencement selon l'une quelconque des revendications précédentes, **caractérisé en ce que** l'organe de blocage (80) comporte un doigt de blocage (94) qui, en position de blocage, coopère avec un cran (28) complémentaire du support de données (12).

8. Agencement selon la revendication 7, **caractérisé en ce que** le cran (28) est réalisé dans au moins un des bords longitudinaux (20, 22) du support de données (12), et **en ce que** le cran (28) est ouvert transversalement.

9. Agencement selon l'une des revendications 7 ou 8, **caractérisé en ce que** l'escamotage de l'organe de blocage (80) à l'encontre des moyens (82) qui le sollicite élastiquement vers sa position de blocage, est provoqué lors de l'extraction du support de données (12) par la coopération d'un bord transversal avant (32) du cran latéral (28) du support de données (12) avec un profil de came arrière (98) complémentaire du doigt de blocage (94) formant rampe.

10. Agencement selon l'une quelconque des revendications précédentes, **caractérisé en ce qu'**en position arrière de repos, l'organe de commande (46) obture une fenêtre (44) d'introduction du support de données (12) dans le logement (40).

11. Agencement selon l'une quelconque des revendications précédentes, **caractérisé en ce qu'**il comporte un organe élastique (54) qui est interposé entre l'organe de commande (46) et le boîtier (36) et **en ce que** le déplacement de l'organe de commande (46) de sa position arrière de repos vers sa position extrême avant s'effectue à l'encontre de cet organe élastique (54) de manière à constituer un organe d'éjection automatique du support de données (12).

12. Agencement selon la revendication 11, **caractérisé en ce qu'**il comporte des moyens de butée (78) qui déterminent la position arrière de repos de l'organe de commande (46).

13. Agencement selon l'une quelconque des revendications précédentes, **caractérisé en ce que** le boîtier (36) comporte un électroaimant (100) de verrouillage de l'organe de blocage (80) dans sa position de blocage du support de données (12), dont le noyau mobile constitue un doigt de verrouillage (102) qui peut être commandé en saillie à l'extérieur du boîtier de l'électroaimant pour s'étendre en regard d'une partie (96, 104) l'organe de blocage (80) afin d'empêcher ce dernier de se déplacer vers sa position escamotée.

14. Agencement selon l'une quelconque des revendications précédentes, **caractérisé en ce qu'**en position active, au moins une partie arrière du support de données (12) fait saillie hors du boîtier (36) de manière à constituer une partie de préhension (34) permettant de l'extraire hors du boîtier (36).

15. Agencement selon l'une quelconque des revendications précédentes, **caractérisé en ce qu'**il équipe un véhicule automobile dont les fonctions d'antivol sont partiellement ou totalement assurées par traitement de données dont certaines, contenues dans le support de données (12), sont représentatives d'un utilisateur autorisé, ou d'un groupe d'utilisateurs autorisés, du véhicule.

## Patentansprüche

1. Anordnung (10) zum Datenaustausch zwischen einem starren oder halbstarren Datenträger (12) und einer Vorrichtung (14) zum Datenaustausch, insbesondere zum Lesen der auf dem Träger enthaltenen Daten, wobei die Vorrichtung ein Gehäuse (36) umfaßt, in das der die Form eines Parallelepipeds aufweisende Träger (12) in Längsrichtung manuell von hinten nach vorne in eine Aufnahme (40) des Gehäuses (36) einführbar ist, in der er eine vorbestimmte aktive Position besetzt, und wobei die Vorrichtung (14) sowohl ein Verriegelungsorgan (80) umfaßt, welches in bezug auf das Gehäuse (36) beweglich montiert ist zwischen einer Verriegelungsposition, bei der es den Datenträger (12), in Längsrichtung gesehen, in der aktiven Position in dem Gehäuse (36) zurückhält, und einer zurückgeschobenen Position, bei der es möglich ist, den Datenträger (12) aus dem Gehäuse (36) zu ziehen, als auch ein Betätigungsorgan (46) des Vernegelungsorganes (80) enthält, welches mit dem seitlichen vorderen Rand (24) des Datenträgers (12) zusammenwirkt,
**dadurch gekennzeichnet, daß** das Verriegelungsorgan (80) ständig in Richtung der Verriegelungsstellung elastisch belastet ist und daß das Betätigungsorgan (46) beweglich angeordnet ist,
- einerseits in bezug auf das Gehäuse (36) in Längsrichtung verschiebbar zwischen einer hinteren Ruhestellung und einer vorderen Endstellung zur Betätigung der Verriegelung und
- andererseits in bezug auf das Verriegelungsorgan (80), mit dem es derart zusammenwirkt, daß eine automatische Verriegelung des Datenträgers (12) erfolgt, wenn das Betätigungsorgan (46) seine vordere Endposition erreicht.

2. Anordnung nach Anspruch 1, **dadurch gekennzeichnet, daß** das Betätigungsorgan (46) ein nockenförmiges Profil (68) aufweist und daß das Verriegelungsorgan (80) einen eine Nachführeinrichtung bildenden Betätigungszapfen (70) umfaßt, der mit dem nockenförmigen Profil (68) zusammenwirkt und mit diesem durch ein elastisches Rückstellorgan (82) in Kontakt gehalten wird.

3. Anordnung nach Anspruch 2, **dadurch gekennzeichnet, daß** das elastische Rückstellorgan (82) das Verriegelungsorgan (80) in Richtung auf seine Verriegelungsstellung elastisch belastet.

4. Anordnung nach Anspruch 3, **dadurch gekennzeichnet, daß** das nockenförmige Profil (68) einen in Längsrichtung geradlinigen Bereich (72) aufweist, an den sich hinten eine Kerbe (74) anschließt, von welcher der Betätigungszapfen (70) aufgenommen wird, wenn sich das Betätigungsorgan (46) in seiner vorderen Endposition und das Verriegelungsorgan (80) in seiner Verriegelungsposition befinden.

5. Anordnung nach Anspruch 4, **dadurch gekennzeichnet, daß** die Kerbe (74) eine vordere Flanke (76) umfaßt, die eine Rampe bildet, mit der der Betätigungszapfen (70) bei dem Herausziehen des Datenträgers (12) aus dem Gehäuse (36) zusammenwirkt.

6. Anordnung nach einem der vorhergehenden Ansprüche, **dadurch gekennzeichnet, daß** das Verriegelungsorgan (80) aus einem Schieber besteht, der in Querrichtung und in einer im wesentlichen parallel zum Datenträger (12) befindlichen horizontalen Ebene verschiebbar angeordnet ist.

7. Anordnung nach einem der vorhergehenden Ansprüche, **dadurch gekennzeichnet, daß** das Verriegelungsorgan (80) einen Verriegelungszapfen (94) aufweist, der in der Verriegelungsstellung mit einer komplementären Ausnehmung (28) des Datenträgers (12) zusammenwirkt.

8. Anordnung nach Anspruch 7, **dadurch gekennzeichnet, daß** die Ausnehmung (28) mindestens in einem der sich in Längsrichtung erstreckenden Ränder (20, 22) des Datenträgers (12) angeordnet ist, und daß die Ausnehmung (28) seitlich offen ist.

9. Anordnung nach einem der Ansprüche 7 oder 8, **dadurch gekennzeichnet, daß** das Verschieben des Verriegelungsorganes (80) entgegen der Kraft der Mittel (82), die es elastisch in Richtung auf seine Verriegelungsposition belasten, bei dem Herausziehen des Datenträgers (12) durch das Zusammenwirken eines vorderen, quer angeordneten Randes (32) der seitlichen Ausnehmung (28) des Datenträgers (12) mit einem hinteren nockenförmigen Profil (98) des eine Rampe bildenden Verriegelungszapfens (94) verursacht wird.

10. Anordnung nach einem der vorhergehenden Ansprüche, **dadurch gekennzeichnet, daß** das Betätigungsorgan (46) in der hinteren Ruhestellung eine Öffnung (44) zur Einführung des Datenträgers in die Aufnahme (40) verschließt.

11. Anordnung nach einem der vorhergehenden Ansprüche, **dadurch gekennzeichnet, daß** sie ein elastisches Organ (54) umfaßt, das zwischen dem Betätigungsorgan (46) und dem Gehäuse (36) angeordnet ist, und daß die Verschiebung des Betätigungsorganes (46) von seiner hinteren Ruheposition in seine vordere Endposition entgegen der Kraft dieses elastischen Organes (54) erfolgt, so daß es sich um ein Organ handelt, welches den Datenträger (12) automatisch auswirft.

12. Anordnung nach Anspruch 11, **dadurch gekennzeichnet, daß** sie Anschlagmittel (78) umfaßt, welche die hintere Ruheposition des Betätigungsorganes (46) festlegen.

13. Anordnung nach einem der vorhergehenden Ansprüche, **dadurch gekennzeichnet, daß** das Gehäuse (36) einen Elektromagneten (100) zur Verriegelung des Verriegelungsorganes (80) in seiner den Datenträger (12) verriegelnden Position enthält, dessen verschiebbarer Kern einen Verriegelungszapfen (102) bildet, der derart betätigbar ist, daß er aus dem Gehäuse des Elektromagneten hervorragt, um sich entlang eines Teiles (96, 104) des Verriegelungsorganes (80) zu erstrecken, um Letzteres hinsichtlich einer Verschiebung in Richtung auf seine zurückgeschobene Position zu sperren.

14. Anordnung nach einem der vorhergehenden Ansprüche, **dadurch gekennzeichnet, daß** in der aktiven Position mindestens ein hinterer Bereich des Datenträgers (12) aus dem Gehäuse (36) herausragt, derart, daß er ein Griffteil (34) bildet, welches ein Herausziehen des Datenträgers ermöglicht.

15. Anordnung nach einem der vorhergehenden Ansprüche, **dadurch gekennzeichnet, daß** sie zur Ausrüstung eines Kraftfahrzeuges dient, dessen Diebstahlschutzfunktionen teilweise oder vollständig durch die Verarbeitung von Daten sichergestellt sind, von denen gewisse, auf dem Datenträger (12) enthaltenen Daten, für einen autorisierten Benutzer oder eine Gruppe autorisierter Benutzer des Fahrzeuges repräsentativ sind.

## Claims

1. Arrangement (10) for exchange of data between a rigid or semi-rigid data support (12) and a data exchange device (14), particularly for reading data contained in the support, of the type containing a housing (36) in which the generally parallelepiped shaped support (12) is inserted longitudinally, manually from the back towards the front, into a receptacle (40) in the housing (36) in which it occupies a determined active position, and of the type in which the device (14) comprises a locking element (80) mounted free to move with respect to the housing (36) between a locking position in which it retains the data support (12) longitudinally in the active position in the housing (36), and a retracted position in which the data support (12) can be extracted from the housing (36), and an element (46) for controlling the locking element (80) with which the forward transverse edge (24) of the data support (12) will cooperate,
**characterised in that** the locking element (80) is permanently elastically (82) forced towards the locking position and **in that** the control element (46) is mounted free to move,
- firstly in longitudinal translation with respect to the housing (36) between a rear position at rest and a extreme forward position for controlling locking (80), and
- secondly, with respect to the locking element (80) with which it cooperates so as to automatically lock the data support (12) when the control element (46) reaches its extreme forward position.

2. Arrangement according to claim 1, **characterised in that** the control element (46) comprises a cam profile (68) and the locking element (80) comprises a control pin (70) that forms a cam follower that cooperates with the cam profile (68) with which it is held in contact by an elastic return element (82).

3. Arrangement according to claim 2, **characterised in that** the elastic return element (82) elastically forces the locking element (80) towards its locking position.

4. Arrangement according to claim 3, **characterised in that** the cam profile (68) comprises a globally straight portion (72) in the longitudinal direction that is prolonged backwards by a recess (74) in which the control pin (70) fits when the control element (46) is in the forward extreme position and the locking element (80) is in the locking position.

5. Arrangement according to claim 4, **characterised in that** the recess (74) comprises a forward side (76) forming a gradient with which the control pin (70) cooperates when the data support (12) is extracted from the housing (36).

6. Arrangement according to any one of the previous claims, **characterised in that** the locking element (80) consists of a slide mounted free to move transversely in a horizontal plane globally parallel to the data support (12).

7. Arrangement according to any one of the previous claims, **characterised in that** the locking element (80) comprises a locking pin (94) that cooperates with a complementary notch (28) in the data support (12) when in the locking position.

8. Arrangement according to claim 7, **characterised in that** the notch (28) is made in at least one of the longitudinal edges (20, 22) of the data support (12), and **in that** the notch (28) is open transversely.

9. Arrangement according to either claim 7 or 8, **characterised in that** retraction of the locking element (80) against the resistance of the means (82) that forces it elastically towards its locking position, is caused during extraction of the data support (12) by cooperation between a forward transverse edge (32) of the side notch (28) in the data support (12) with a rear cam profile (98) complementary to the locking pin (94) forming a gradient.

10. Arrangement according to any one of the previous claims, **characterised in that** when the control element (46) is in the rear position at rest, it closes off a window (44) through which the data support (12) is inserted into the housing (40).

11. Arrangement according to any one of the previous claims, **characterised in that** it comprises an elastic element (54) inserted between the control device (46) and the housing (36) and **in that** the displacement of the control element (46) from its rear position at rest towards its extreme forward position takes place against the resistance of this elastic element (54) so as to form an automatic ejection element for the data support (12).

12. Arrangement according to claim 11, **characterised in that** it comprises stop means (78) that determine the rear position at rest of the control element (46).

13. Arrangement according to any one of the previous claims, **characterised in that** the housing (36) comprises an electromagnet (100) locking the locking element (80) in its position locking the data support (12) in place, and the mobile core of this electromagnet forms a locking pin (102) that can be controlled to project outside the housing of the electromagnet to extend facing a part (96, 104) of the locking element (80) to prevent the locking element from moving towards its retracted position.

14. Arrangement according to any one of the previous claims, **characterised in that** when in the active position, at least a rear part of the data support (12) projects outside the housing (36) so as to form a gripping part (34) to extract it from the housing (36).

15. Arrangement according to any one of the previous claims, **characterised in that** it is installed on an automobile vehicle for which anti-theft functions are partly or wholly controlled by data processing, and some of the data contained in the data support (12) are representative of an authorised user, or a group of authorised users, of the vehicle.
